# EUROPEAN PATENT SPECIFICATION

(11) **EP 4 540 432 B1**
(45) Date of publication and mention of the grant of the patent: **03.09.2025**
(21) Application number: 23748616.2
(22) Date of filing: 13.07.2023
(51) Int. Cl.: H01M 6/52, H01M 10/54, C22B 7/00, C22B 21/00, C22B 3/00, C22B 26/12

(54) **METHOD FOR REMOVING ALUMINUM**
VERFAHREN ZUR ENTFERNUNG VON ALUMINIUM
PROCÉDÉ DE RETRAIT D'ALUMINIUM

(30) Priority: 14.07.2022 JP 2022113463; 20.03.2023 JP 2023044697
(43) Date of publication of application: 23.04.2025
(73) Proprietor: JX Metals Circular Solutions Co., Ltd., Tokyo 105-8417 (JP)
(72) Inventor: HIGUCHI,Naoki, Hitachi-shi, Ibaraki 317-0056 (JP); SHIKADA,Kei, Hitachi-shi, Ibaraki 317-0056 (JP)
(74) Representative: Arnold & Siedsma
(86) International application number: PCT/JP2023/025955
(87) International publication number: WO 2024/014521

(56) References cited:
- EP-A1- 3 950 978
- CN-A- 111 987 381
- CN-A- 113 897 490
- JP-A- 2007 122 885
- JP-A- 2014 156 648
- JP-A- 2014 162 982
- JP-A- 2017 166 028
- JP-A- 2018 145 473
- JP-A- 2019 178 395

## Description

### Technical Field

This specification discloses method for removing aluminum, and a method for recovering metals.

### Background Art

In recent years, it has been widely studied for recovery of valuable metals such as cobalt and nickel which may be contained in lithium ion secondary battery waste discarded for expired product life, manufacturing defects or other reasons, by means of a wet process, in terms of effective utilization of resources.

In a process of recovering valuable metals from lithium ion battery waste, for example, battery powder obtained after subjecting the lithium ion battery waste to preprocessing such as roasting is added to an acidic leaching solution to leach cobalt, nickel and the like which may be contained in the battery powder, thereby obtaining a leached solution.

Subsequently, each metal ion in the solution is separated by multiple solvent extraction processes or the like to recover the valuable metals. In the multiple solvent extraction processes, each of cobalt ions and nickel ions may be sequentially extracted and back-extracted (see, for example, Patent Literature 1).

By the way, aluminum is used for lithium ion secondary batteries because of its excellent electrical and thermal conductivity, and it is, therefore, also included in the lithium ion battery waste. Aluminum in the lithium ion battery waste is difficult to be completely removed by the above preprocessing, and it remains in the battery powder, and is dissolved together with cobalt and the like during leaching and may be contained as aluminum ions in the leached solution. In recovering the valuable metals from lithium ion battery waste, it will be necessary to remove aluminum ions prior to separation of the valuable metals from the leached solution.

In this regard, Patent Literature 2 describes:
"A method for removing aluminum from an acidic solution in which at least cobalt and aluminum are dissolved, wherein the acidic solution is neutralized in a state of an oxidation-reduction potential (ORPvsAg/AgCl) of the acidic solution of -600 mV or more and 100 mV or less to remove the aluminum".
Patent Literature 2 discloses:
   "The pH of the leached solution in the aluminum removal step is more preferably 4.0 to 6.0, and even more preferably 4.5 to 5.0", "In the aluminum removal step, an alkali such as sodium hydroxide, sodium carbonate and ammonia can be added to the acidic solution to increase the pH to the range described above".

### Citation List

### Patent Literature

PTL 1: Japanese Patent Application Publication No. 2014-162982 A
PTL 2: Japanese Patent Application Publication No. 2017-166028 A
PTL 3: EP3950978 A1
PTL 4: JP 2018 145473 A

### Summary of Invention

### Technical Problem

In the "method for removing aluminum" and the "aluminum removal step" as described in Patent Literatures 1 and 2, when the pH is increased to a certain level and neutralized, not only aluminum but also nickel and/or cobalt are precipitated, leading to loss of nickel and/or cobalt. On the other hand, if the increase in the pH during neutralization is limited to the extent that nickel and/or cobalt are not precipitated, aluminum cannot be sufficiently removed.

This specification provides a method for removing aluminum which can effectively remove aluminum, and a method for recovering metals.

### Solution to Problem

The invention is conducted as defined in claims 1 to 13.

### Advantageous Effects of Invention

According to the method for removing aluminum and the method for recovering metals as described above, aluminum can be effectively removed.

### Brief Description of Drawings

[Fig.1]Fig. 1 is a flow chart illustrating a method for recovering metals including a method for removing aluminum according to an embodiment.
[Fig.2]Fig. 2 is a graph showing an X-ray diffraction pattern obtained by an X-ray diffraction method of a neutralized residue obtained in a test in which calcium is added in a neutralization step to increase a pH.
[Fig.3]Fig. 3 is results showing the form of aluminum in a neutralized residue that changes by an F/Al molar ratio on a graph illustrating a relationship between an aluminum grade and a fluorine grade of a raw material of Test Example 2.
[Fig.4]Fig. 4 is results of whether or not a predetermined low aluminum ion concentration can be achieved in a leaching step and a neutralization step, on a graph illustrating a relationship between an aluminum grade and a fluorine grade of a raw material of Test Example 2.

### Description of Embodiments

Embodiments of the method for removing aluminum and the method for recovering metals described above will be described below in detail.

A method for removing aluminum according to an embodiment includes: a leaching step of bringing a raw material, the raw material having battery powder, the battery powder being obtained from lithium ion battery waste and containing at least aluminum and nickel and/or cobalt, into contact with an acidic leaching solution to leach the battery powder to obtain a leached solution; and a neutralization step of using the leached solution as a metal-containing solution, increasing a pH of the metal-containing solution and separating a neutralized residue to obtain a neutralized solution. In the neutralized, the metal-containing solution contains calcium and fluorine. Here, a molar ratio of fluorine to aluminum (F/Al molar ratio) of the raw material is 1.3 or more. Moreover, in the neutralization step, a molar ratio of calcium to aluminum ions (Ca/Al molar ratio) in the metal-containing solution is 0.2 or more. This allows the aluminum ions in the metal-containing solution to be precipitated and contained in the neutralized residue together with calcium and fluorine.

It was newly found that when calcium is contained in the metal-containing solution, aluminum is precipitated with calcium by forming a compound of aluminum with calcium, or like during neutralization. Furthermore, if the raw material containing the battery powder contains fluorine and a molar ratio of fluorine to aluminum (F/Al molar ratio) of the raw material is 1.3 or more, aluminum will be combined with calcium and fluorine in the neutralization step, which can be precipitated as a compound such as LiCa(AlF₆). Since the LiCa(AlF₆) has lower solubility in the acidic leaching solution, the precipitation in the form of LiCa(AlF₆) allows more aluminum to be contained in the neutralized residue and removed without increasing the pH too much.

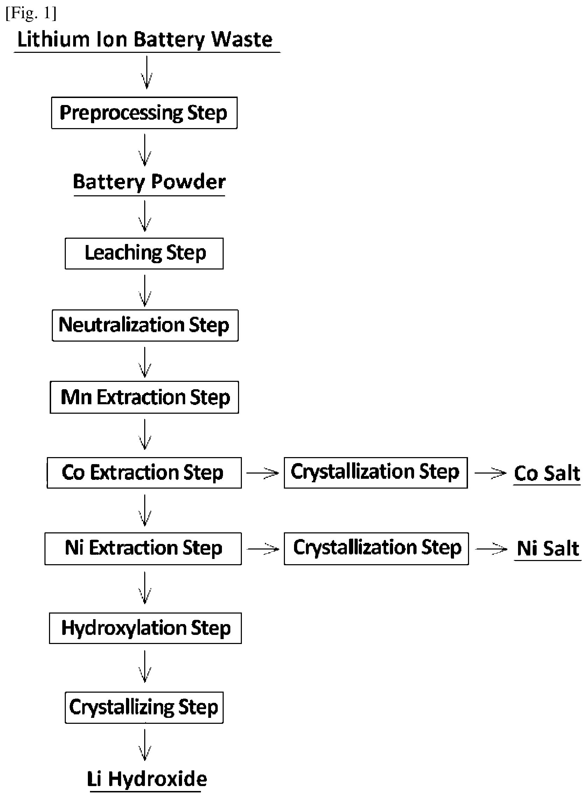

The method for removing aluminum according to this embodiment may be used for the method for recovering metals as shown in Fig. 1 as an example. The method for recovering metals in Fig. 1 includes subjecting the lithium ion battery waste to a preprocessing step, a leaching step, a neutralization step, a manganese extraction step, a cobalt extraction step, a nickel extraction step, a hydroxylation step and a crystallizing step in this order. When the extracted solution obtained in each of the cobalt extraction step and the nickel extraction step is subjected to a crystallization step, compounds such as sulfates of cobalt and nickel can be produced, respectively. Here, it is to be understood that descriptions will be made according to Fig. 1, but Fig. 1 is an example and is not limited to such a specific flow.

### (Lithium Ion Battery Waste)

The lithium ion battery waste of interest is lithium ion secondary batteries which can be used in various electronic devices such as mobile phones and which have been discarded due to the expired life of the product, manufacturing defects or other reasons. The recovery of valuable metals from such lithium ion battery waste is preferred in terms of effective utilization of resources.

The lithium ion battery waste has a housing containing aluminum as an exterior that wraps around the lithium ion secondary battery. Examples of the housing include those made only of aluminum and those containing aluminum, iron, aluminum laminate, and the like. The lithium ion battery waste may also contain, in the above housing, cathode active materials composed of a single metal oxide containing lithium and one selected from the group consisting of nickel, cobalt and manganese, or a composite metal oxides containing lithium and two or more of those, or the like, and aluminum foils (cathode substrates) to which the cathode active materials are applied and fixed by, for example, polyvinylidene fluoride (PVDF) or other organic binders. In addition, the lithium ion battery waste may contain copper, iron, or the like. Further, the housing of the lithium ion battery waste generally contains an electrolytic solution having an electrolyte such as lithium hexafluorophosphate dissolved in an organic solvent. For example, ethylene carbonate, diethyl carbonate or the like may be used as the organic solvent.

### (Preprocessing)

In many cases, the lithium ion battery waste is subjected to preprocessing. The preprocessing may include at least one of roasting, crushing and sieving. The lithium ion battery waste becomes battery powder through the preprocessing. The roasting, crushing, and sieving in the preprocessing step may optionally be performed, respectively, or they may be performed in any order. The battery powder means a powder obtained by subjecting the lithium ion battery waste to any preprocessing to separate and concentrate cathode material components. The battery powder may be obtained as a powder by crushing and sieving the lithium ion battery waste with or without a heat treatment to concentrate the cathode material components.

In the roasting, the above lithium ion battery waste is heated. When the roasting is carried out, metals such as lithium and cobalt contained in the lithium ion battery waste is changed to a form which can be easily dissolved in an acidic leaching solution in the leaching step. During the roasting, the lithium ion battery waste is heated by maintaining it in a temperature range of, for example, from 450°C to 1000°C, preferably in a temperature range of from 600°C to 800°C, for 0.5 to 6 hours. The roasting can be carried out in either an air atmosphere or an inert atmosphere such as nitrogen, and in the air atmosphere and the inert atmospheres in this order or vice versa. The roasting can be of batch type or continuous type. For example, the batch type includes a stationary furnace, the continuous type includes a rotary kiln furnace, and other various types of furnaces can also be used.

During the roasting, at least a part of the electrolyte is removed from the lithium ion battery waste because the electrolytic solution as the electrolyte is evaporated, or the like. In many cases, when the lithium ion battery waste is heated during the roasting, the components of the internal electrolyte are sequentially evaporated, starting with the component having a lower boiling point. Also, when the temperature of the lithium ion battery waste reaches a higher temperature, the resin such as the organic binder is decomposed or vaporized. Even if a part of the electrolyte and the organic binder is thus removed, a certain component such as fluorine contained in the electrolyte and the organic binder remains and may be contained in the battery powder obtained after the preprocessing step. When the roasting is carried out, the electrolyte is removed and rendered harmless, and the organic binder is decomposed to promote separation between the aluminum foil and the cathode active material during crushing and sieving, which will be described below. Although the roasting changes the composition of the cathode active material, the roasted material that has undergone roasting is also referred to as the cathode active material.

After the roasting, the crushing can be carried out to remove cathode materials and the like from the housing of the lithium ion battery waste. The crushing selectively separates the cathode active materials from the aluminum foils to which the cathode active materials are applied, while destroying the housing of the lithium ion battery waste.

Various known apparatuses or devices can be used in the crushing. In particular, it is preferable to use an impact-type crusher that can crush lithium ion battery waste by applying an impact while cutting it. Examples of the impact-type crusher include a sample mill, a hammer mill, a pin mill, a wing mill, a tornado mill, and a hammer crusher. It should be noted that a screen can be installed at an outlet of the crusher, whereby the lithium ion battery waste is discharged from the crusher through the screen when crushed to a size that can pass through the screen.

After crushing the lithium ion battery waste, the sieving is performed by sieving it using a sieve having an appropriate opening. Thus, aluminum or copper remains on the sieve, and battery powder from which Al or Cu has been removed to some extent can be obtained under the sieve.

The battery powder obtained in the preprocessing step contains at least aluminum and at least one of nickel and cobalt. The battery powder has an aluminum content of, for example, 1% to 10% by mass, typically 3% to 5% by mass. When nickel is contained, the nickel content is, for example, 1% to 30% by mass, typically 5% to 20% by mass. Further, when cobalt is contained, the cobalt content in the battery powder is, for example, 1% by mass to 30% by mass, typically 5% by mass to 20% by mass. The battery powder may also contain lithium in an amount of, for example, 2% to 8% by mass.

The battery powder may also contain manganese. When manganese is contained, the manganese content is, for example, 1% to 30% by mass. In addition, the battery powder may contain 1% to 5% by mass of iron and 1% to 10% by mass of copper. The battery powder may also contain 0.1% by mass to 10% by mass of fluorine.

The battery powder can be brought into contact with water prior to the leaching step using the acidic leaching solution described below, in order to extract substantially only lithium from the battery powder. Lithium in the battery powder is thus leached into the water. In this case, the battery powder as the water leached residue is subjected to a leaching step. When water leaching is carried out, at least a part of the electrolytic solution or other electrolytes in the lithium ion battery waste is removed by, for example, flowing into water. As an example, when lithium is leached with water from the battery powder that has been roasted by switching the atmosphere from the air atmosphere to the inert atmosphere, the fluorine content in the water leached residue may be reduced to about 10% of the fluorine content of the battery powder on a mass basis, and in some cases, the fluorine concentration in the solution after water leaching may be about 0.5 g/L.

However, when the water leaching is carried out, the equipment is required, and the processing time increases by performing both the water leaching and the acid leaching in the leaching step, as well as it may be necessary to manage the roasting conditions for effectively leaching lithium with water. Further, even with such management, the leaching rate of lithium with water may not be significantly increased. Therefore, the battery powder obtained as described above is preferably subjected to acid leaching in the leaching step without the water leaching. When the water leaching is not carried out, the lithium ion concentration in the liquid can be easily maintained at a higher level in wet processes after the leaching step.

It should be noted that, in order to remove the electrolyte from the lithium ion battery waste in the preprocessing step, the lithium ion battery waste may be washed with a washing liquid such as water at any time during the preprocessing step, in addition to the roasting and water leaching as described above.

### (Leaching Step)

In the leaching step, a raw material containing the battery powder is leached with an acidic leaching solution such as sulfuric acid. This provides a leached solution in which the metals in the battery powder are dissolved. If necessary, solid-liquid separation can be performed at the end of the leaching to separate the leached residue.

If the raw material to be brought into contact with the acidic leaching solution contains a larger amount of fluorine to some extent than aluminum, a larger amount of aluminum can be precipitated in the form of LiCa(AlF₆) and the like, in a neutralization step as described below. More particularly, the molar ratio of fluorine to aluminum (F/Al molar ratio) of the raw material is 1.3 or more. If the F/Al molar ratio is less than 1.3, most of the aluminum will not be combined with calcium and will form Li-Al composite hydroxide in the precipitate in the neutralization step. The Li-Al composite hydroxide has a higher solubility in the acidic leaching solution than LiCa (AlF₆), resulting in insufficient removal of aluminum. Therefore, when the F/Al molar ratio of the raw material is less than 1.3, fluorine is added to the raw material to adjust the F/Al molar ratio so that the it is 1.3 or more. When the F/Al molar ratio is 2.0 or more, or 3.0 or more, substantially the whole aluminum in the precipitate may form LiCa(AlF₆) in the neutralization step, which can achieve further effective removal of aluminum.

In order to adjust the F/Al molar ratio as described above, fluorine can be added to the raw material as described above, if necessary. In this case, the raw material may contain fluorine in addition to the battery powder. The timing of the addition of fluorine is not particularly limited, and it may be any timing until an aluminum removal stage of a neutralization step as described later is terminated.

For example, the fluorine can be previously contained in the raw material together with the battery powder, and this can be brought into contact with the acidic leaching solution. Alternatively, before or after bringing the acidic leaching solution with the battery powder, the fluorine can be added as a remaining raw material to the acidic leaching solution, or the fluorine can be added as a remaining raw material to the leached solution obtained in the leaching step or the metal-containing solution during the aluminum removal stage of the neutralization step. The timing of the addition of fluorine is not limited to before the beginning of leaching of the battery powder in the leaching step, and it may be after the beginning of leaching or after the leaching step, or further during the neutralization step. If the fluorine is added during the leaching step, after the leaching step, or during the neutralization step, the F/Al molar ratio is calculated assuming that the amount of fluorine added was included in the raw material before the leaching step. Alternatively, if the lithium ion battery waste and the battery powder obtained by preprocessing subjected to the lithium ion battery waste contain fluorine, the addition of fluorine may not be required, but fluorine may be added to the raw materials separately from the battery powder.

The calcium and/or fluorine may be contained in lithium ion battery waste (glass fibers of battery cells, electrolytes, organic binders, etc.), and the calcium and/or fluorine may remain in battery powder.

Moreover, it is also possible to mix several types of battery powders with different contents of fluorine. Regardless of whether or not the battery powder contains fluorine, the fluorine added to the acidic leaching solution until a completion of the leaching in the leaching step (until just before the solid-liquid separation if the solid-liquid separation is carried out) will be considered to be a part of the raw material. The raw material may be added to the acidic leaching solution at once, or it may be added in multiple parts from the start to the end of the leaching.

When fluorine is added to the raw material separately from the battery powder, the form of fluorine is, for example, a fluoride salt, specifically at least one selected from the group consisting of lithium fluoride (LiF), sodium fluoride (NaF) and potassium fluoride (KF).

In addition, hydrofluoric acid (HF) can be used as at least a part of the acid. In this case, the fluorine in the hydrofluoric acid is considered to be a part of the raw material that is brought into contact with the acidic leaching solution.

When the battery powder contains a larger amount of fluorine to some extent, the F/ Al molar ratio of the battery powder may be 1.3 or more. Alternatively, fluorine may be added to the raw material separately from the battery powder, and the F/Al molar ratio of the raw material may be adjusted so that the F/Al molar ratio of the raw material is 1.3 or more. In addition, when fluorine is added to the acidic leaching solution after starting the leaching of the battery powder, theoretically, the total amount of fluorine contained in the acidic leaching solution and the precipitate after the addition of fluorine is equal to the amount of fluorine of the raw material. Therefore, the above F/Al molar ratio can be determined from the total amount of fluorine contained in the acidic leaching solution and the precipitate after addition of fluorine.

In the leaching step, the pH of the acidic leaching solution or leached solution may be, for example, less than 3.5. Moreover, an oxidation-reduction potential (ORP value, based on silver/silver chloride potential) may be 100 mV or less.

As a diluent for adjusting the pH of the acidic leaching solution in the leaching step, a nickel extracted solution (an aqueous lithium sulfate solution or the like) in a nickel extraction step can be used as described below. Thus, the lithium ions are circulated in a series of steps in the wet processes, and the lithium ions in the liquid can be concentrated in the steps.

The leached solution may have, for example, an aluminum ion concentration of 1.0 g/L to 20 g/L, a nickel ion concentration of 10 g/L to 50 g/L, a cobalt ion concentration of 10 g/L to 50 g/L, a manganese ion concentration of 0 g/L to 50 g/L, an iron ion concentration of 0.1 g/L to 5.0 g/L, a copper ion concentration of 0.005 g/L to 0.2 g/L, and a fluoride ion concentration of 0.01 g/L to 20 g/L. As long as the leached solution contains at least one of nickel ions and cobalt ions, the other may not be contained.

### (Neutralization Step)

The leached solution obtained in the leaching step contains at least aluminum ions and nickel ions and/or cobalt ions. The neutralization step is carried out after the leaching step. As used herein, the solution obtained after the leaching step and containing the metal ions by dissolution of the metals in the leaching step is referred to as a metal-containing solution. The metal-containing solution includes both the leached solution obtained from the leaching step and the solution in the middle of the neutralization step during which the pH of the leached solution is increased as described below.

In the neutralization step, the pH of the metal-containing solution is increased to separate the neutralized residue to obtain a neutralized solution. The neutralization step may include an aluminum removal stage. In the aluminum removal stage, the pH of the metal-containing solution is increased to precipitate and remove at least a part of the aluminum ions. If the metal-containing solution contains iron ions, the neutralization step preferably also includes an iron removal stage for removing the iron ions after the aluminum removal stage. In the iron removal stage, the iron ions can be removed by adding an oxidizing agent to the aluminum removed solution obtained in the aluminum removal stage and further adding an alkali to increase the pH. As a result, the neutralized solution as an iron removed solution or the like is obtained.

When removing the aluminum ions in the aluminum removal stage, first, an alkaline pH adjusting agent is added to the metal-containing solution to increase the pH rapidly. Specific examples of the alkaline pH adjusting agent used herein include lithium hydroxide, sodium hydroxide, sodium carbonate, and ammonia. Among them, the aqueous lithium hydroxide solution may employ a solution obtained in a hydroxylation step, and in this case, the lithium ions are circulated in a series of steps in the wet processes.

In the aluminum removal stage of the neutralization step, the metal-containing solution should contain calcium and fluorine. In this case, the aluminum ions in the metal-containing solution are easily precipitated by calcium and fluorine. As a result, the neutralized residue will contain a large amount of aluminum together with calcium and fluorine, so that aluminum can be effectively removed together with calcium and fluorine.

Regarding the containing of calcium and fluorine in the metal-containing solution, if the metal-containing solution already contains required amounts of calcium and fluorine, it may not be necessary to further add calcium and fluorine to it. Alternatively, if the metal-containing solution does not contain calcium and/or fluorine, or if the calcium and/or fluorine in the metal-containing solution are not sufficient, calcium and/or fluorine may be added to the metal-containing solution before, during and/or after increasing the pH of the metal-containing solution up to a predetermined value. The form of calcium added to the metal-containing solution includes, but not particularly limited to, calcium sulfate, calcium carbonate (CaCO₃), calcium hydroxide (Ca(OH)₂), other calcium compounds, and simple calcium. Among them, calcium carbonate is preferable because it is relatively inexpensive. Further, the form of fluorine when adding fluorine to the metal-containing solution may be, for example, a fluoride salt, specifically at least one selected from the group consisting of lithium fluoride (LiF), sodium fluoride (NaF) and potassium fluoride (KF).

In order to sufficiently remove aluminum, the amount of calcium contained in the metal-containing solution is preferably such that the molar ratio of calcium to aluminum ions (the Ca/Al molar ratio) is 0.2 or more, or more than 0.2, and more preferably 0.5 to 3.0, especially 0.5 to 1.5. The amount of calcium as used herein includes the amount of undissolved calcium when there is the undissolved calcium in the metal-containing solution.

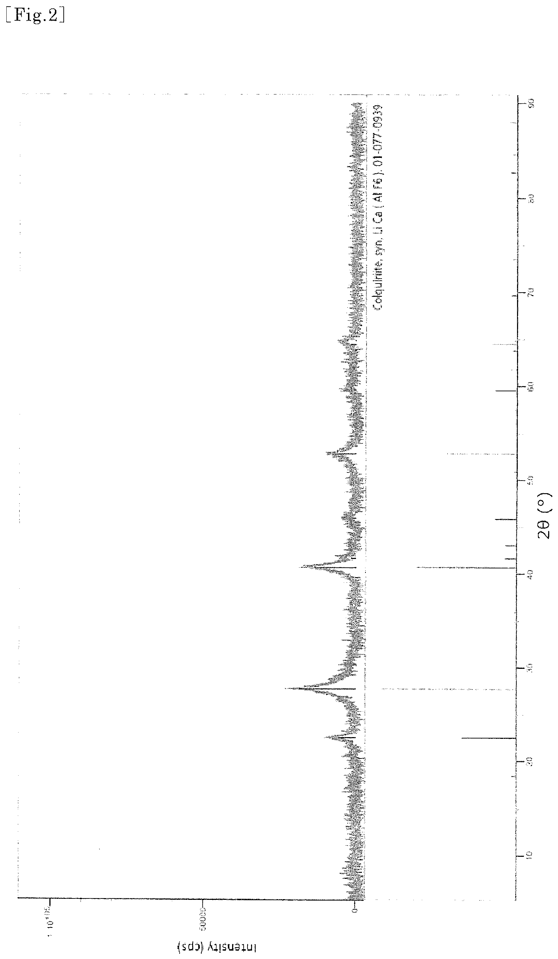

Since the metal-containing solution contains calcium, it is believed that the aluminum ions in the metal-containing solution are precipitated, and the neutralized residue contains, for example, at least one selected from the group consisting of Ca(SO ₄)(H₂O)_{0.5}, LiCa(AlF₆), Ca₃Al₂F₈₍OH)₂(SO₄) · 2H₂O and Ca₂AlF₇. As a reference, Fig. 2 shows an X-ray diffraction pattern of the neutralized residue obtained in a test in which calcium was added in the neutralization step to increase the pH. It is found from Fig. 2 that the neutralized residue contains LiCa(AlF₆).

Further, as described above, a large amount of aluminum can be precipitated in the form of LiCa(AlF₆) or the like in the neutralization step, because the raw material contains a relatively larger amount of fluorine than aluminum. To adjust the F/Al molar ratio in this manner, fluorine can be added as described above, if desired.

When lithium hydroxide is used as the pH adjusting agent, the neutralized residue may contain LiCa(AlF₆), and when sodium hydroxide is used, the neutralized residue may contain Na₃Li₃(AlF₆)₂. The composition of LiCa(AlF₆) is Ca:Al = 1:1, but considering that calcium can be consumed by other compounds, the above Ca/Al molar ratio can be larger than 1.0.

In the aluminum removal stage, the pH adjusting agent preferably increase the pH of the metal-containing solution to the range of 2.5 to 5.0, particularly 3.0 to 4.5. This allows aluminum ions to be effectively separated while suppressing deposition of nickel ions and/or cobalt ions. In this case, the temperature of the metal-containing solution can be 50°C to 90°C. If the temperature of the metal-containing solution is less than 50°C, there is a concern that the reactivity will be poor, and if it is higher than 90°C, a device that can withstand high temperature will be required, as well as it is not preferable from the safety point of view.

After precipitating the aluminum, solid-liquid separation such as filtration is performed using a known apparatus and method such as a filter press and a thickener to remove the neutralized residue to obtain an aluminum removed solution.

Subsequently, in the iron removal stage, an oxidizing agent may be added to the iron removed solution to remove iron ions from the iron removed solution. Addition of the oxidizing agent oxidizes the iron in the liquid from divalent to trivalent iron, and the trivalent iron is precipitated as an oxide or hydroxide at a pH lower than that of the divalent iron. The iron is often precipitated as a solid such as iron hydroxide (Fe(OH)₃ ). Precipitated iron can be removed as the neutralized residue by solid-liquid separation.

The ORP value during oxidation is preferably 300 mV to 900 mV in order to precipitate the iron. After adding the oxidizing agent, for example, an acid such as sulfuric acid, hydrochloric acid, and nitric acid may be added to decrease the pH. For example, the pH is decreased to less than 3.

The oxidizing agent is not particularly limited as long as it can oxidize iron, but it may preferably be manganese dioxide, a cathode active material, and/or a manganese-containing leached residue obtained by leaching a cathode active material. The manganese-containing leached residue obtained by leaching the cathode active material with the acid or the like may include manganese dioxide. When the cathode active material or the like is used as the oxidizing agent, it causes a precipitation reaction which converts manganese dissolved in the liquid to manganese dioxide, so that the precipitated manganese can be removed together with iron.

After adding the oxidizing agent, the pH can be adjusted to a predetermined range by adding an alkali such as sodium hydroxide, sodium carbonate, or ammonia. For example, the iron can be precipitated by adjusting the pH to the range of 3.0 to 4.5.

### (Manganese Extraction Step)

The neutralized solution obtained after the neutralization step can be subjected to a manganese extraction step of extracting the manganese ions and, in some cases, the remaining of the aluminum ions, by solvent extraction, and removing them. In this case, the manganese ions and the remaining of the aluminum ions are extracted to obtain a manganese extracted solution from which those ions have been removed.

In the manganese extraction step, an extracting agent containing a phosphate ester-based extracting agent is preferably used. Here, examples of the phosphate ester-based extracting agent include di-2-ethylhexylphosphoric acid (abbreviated name: D2EHPA or trade name: DP8R). Further, the extracting agent may be a mixture of the phosphate ester-based extracting agent and an oxime-based extracting agent. In this case, the oxime-based extracting agent is preferably aldoxime or based on aldoxime. Specific examples include 2-hydroxy-5-nonylacetophenone oxime (trade name: LIX84), 5-dodecyl salicylaldoxime (trade name: LIX860), a mixture of LIX84 and LIX860 (trade name: LIX984), 5-nonyl salicylaldoxime (trade name: ACORGAM5640) and the like.

During extraction, an equilibrium pH is preferably 2.3 to 3.5, and more preferably 2.5 to 3.0. As the pH adjusting agent having an alkaline property used at this time, it is preferable to use an aqueous lithium hydroxide solution obtained in a hydroxylation step as described below, but sodium hydroxide or the like separately prepared may also be used. When the aqueous lithium hydroxide solution obtained in the hydroxylation step is used as the pH adjusting agent, it is possible to prevent sodium from remaining in the nickel extracted solution after the nickel extraction step described later when sodium hydroxide is used as the pH adjusting agent, and to prevent the sodium from being contaminated as an impurity into the aqueous lithium hydroxide solution produced from the nickel extracted solution. At the time of extraction, it is desirable to carry out extraction by countercurrent type multistage extraction in which directions of flow of the aqueous phase and the solvent used for each extraction are opposite to each other. By doing so, the extraction of cobalt ions, nickel ions, and lithium ions can be suppressed, and the extraction rate of manganese ions can be increased. In the case of the countercurrent type multistage extraction, it is also effective to set the equilibrium pH at the first stage of extraction to a value in the above range, and decrease the equilibrium pH at the time of extraction through successive stages.

The solvent obtained after performing the extraction and back extraction of manganese ions may be subjected to scavenging using a scavenging solution such as sulfuric acid. Calcium contained in the manganese extracting solution to be subjected to the extraction of the manganese ions (neutralized solution) is often extracted into the solvent and transfers to the scavenging solution side by the scavenging. For example, when the concentration of sulfuric acid in the scavenging solution is relatively high, the solubility of calcium sulfate is higher as the concentration of sulfuric acid is higher. Therefore, the higher concentration of calcium in the manganese extracting solution (neutralized solution) may lead to precipitation of calcium as calcium sulfate, which may cause clogging of piping in the manganese extraction step. In order to avoid such clogging of the piping, it is more preferable that an excessive amount of calcium is not added in the neutralization step as described above. From this point of view, the Ca/Al molar ratio may be 1.5 or less.

### (Cobalt Extraction Step and Crystallization Step)

In the cobalt extraction step, cobalt ions are separated by solvent extraction from a manganese extracted solution obtained after extraction in the manganese extraction step.

Here, it is preferable to use a solvent containing a phosphonate ester-based extracting agent. Particularly, 2-ethylhexyl 2-ethylhexylphosphonate (trade name: PC-88A, Ionquest 801) is particularly preferable from the viewpoint of separation efficiency between nickel and cobalt. The extracting agent may be diluted with an aromatic, paraffinic, naphthenic, or other hydrocarbon organic solvent to a concentration of 10% to 30% by volume and used as a solvent.

When extracting the cobalt ions, the equilibrium pH during extraction can be preferably 5.0 to 6.0, and more preferably 5.0 to 5.5. At this time, as the pH adjusting agent, it is preferable to use an aqueous lithium hydroxide solution obtained in a hydroxylation step as described below, but sodium hydroxide or the like separately prepared may also be used. If the pH is less than 5.0, cobalt ions may not be sufficiently extracted into the solvent. This allows the cobalt ions in the manganese extracted solution to be extracted into the solvent. In the extraction of the cobalt ions as well, it is desirable to carry out the extraction by countercurrent type multistage extraction in which directions of flow of the aqueous phase and the solvent used for each extraction are opposite to each other. By doing so, it is possible to increase an extraction rate of cobalt ions while suppressing the extraction of nickel ions and lithium ions.

During the above extraction, not only cobalt ions but also nickel ions, lithium ions, etc., which become impurities in the cobalt extraction step, may be somewhat extracted into the solvent. In this case, if necessary, the solvent extracting the cobalt ions may be subjected to one or more scrubbing processes using a scrubbing solution to remove the impurities such as nickel ions that may be contained in the solvent. The scrubbing solution can be, for example, a sulfuric acid solution and can have a pH of 3.5 to 5.5. The scrubbed solution may contain nickel ions and lithium ions. Therefore, a part or all of the scrubbed solution is used for extraction in the cobalt extraction step (that is, a part or all of the scrubbed solution is mixed with the manganese extracted solution and it is used as an extracting solution to be subjected to the extraction of the cobalt ions to carry out the extraction in the cobalt extraction step). As a result, the nickel ions and lithium ions can be circulated or retained in the steps without losing them. However, if the solvent used to extract the cobalt ions does not contain nickel ions or lithium ions, the scrubbing step may not be performed.

The solvent which has extracted the cobalt ions is then subjected to back extraction. A back extraction solution used for the back extraction may be any inorganic acid such as sulfuric acid, hydrochloric acid, and nitric acid, but sulfuric acid is preferable when a sulfate is obtained in a crystallization step as described below. Here, it is carried out under pH conditions such that all the cobalt ions are extracted from the organic phase (solvent) into the aqueous phase (back extraction solution) as much as possible. More particularly, the pH is preferably in the range of 2.0 to 4.0, and more preferably in the range of 2.5 to 3.5. It should be noted that the O/A ratio and the number of times can be determined as needed. The temperature of the solution may be ordinary temperature, but it may preferably be 10°C to 50°C.

The back extracted solution such as the cobalt sulfate solution obtained in the cobalt extraction step is subjected to a crystallization step. In the crystallization step after the cobalt extraction step, the cobalt ions are crystallized to obtain a cobalt salt such as cobalt sulfate. In the crystallization step, the back extracted solution is heated to, for example, 40°C to 120°C and concentrated. This causes cobalt ions to be crystallized as a cobalt salt. The cobalt salt thus produced preferably has a nickel content of 5 ppm by mass or less, and have sufficiently removed the nickel, so that it can be effectively used as a raw material for producing lithium ion secondary batteries and other batteries. Here, the crystallized solution may contain uncrystallized cobalt ions and lithium ions. Therefore, it is preferable that the crystallized solution is mixed with the back extracted solution in the crystallization step and used for recrystallization, or used for the purpose of adjusting the cobalt ion concentration of the scrubbing solution in the cobalt extraction step, or further used for the extraction of the cobalt extraction step. By repeatedly using them in the steps in this manner, the cobalt ions and lithium ions can be circulated or retained and concentrated in the steps without losing them.

### (Nickel Extraction Step and Crystallization Step)

The cobalt extracted solution after the cobalt ions have been extracted in the cobalt extraction step can be subjected to a nickel extraction step.

In the nickel extraction step, a carboxylic acid-based extracting agent is preferably used to separate nickel ions from the cobalt extracted solution. Examples of the carboxylic acid-based extracting agent include neodecanoic acid and naphthenic acid. Among them, the neodecanoic acid is preferred because of its ability to extract nickel ions. The extracting agent may be diluted with an aromatic, paraffinic, naphthenic, or other hydrocarbon organic solvent to a concentration of 10% to 30% by volume and used as a solvent.

When extracting the nickel ions in the nickel extraction step, the equilibrium pH is preferably 6.0 to 8.0, and more preferably 6.8 to 7.2. The pH adjusting agent used to adjust the pH at this time may be sodium hydroxide or the like, but it is preferable to use an aqueous lithium hydroxide solution obtained in a hydroxylation step as described below. Also in the nickel extraction step, it is desirable to perform extraction by countercurrent type multistage extraction in the same manner as in the cobalt extraction step as described above. By doing so, the extraction of lithium ions can be suppressed, and the extraction rate of nickel ions can be increased.

The solvent extracting the nickel ions may optionally be subjected to one or more scrubbing processes using a scrubbing solution to remove impurities such as lithium ions and sodium ions that may be contained in the solvent. The scrubbing solution can be, for example, a sulfuric acid solution and can have a pH of 5.0 to 6.0. Here, the resulting scrubbed solution may contain lithium ions. Therefore, it is preferable that a part or all of the scrubbed solution is used for extraction in the nickel extraction step (that is, a part or all of the scrubbed solution is mixed with the cobalt extracted solution and it is used as the extracting solution to be subjected to the extraction of the nickel ions to carry out the extraction in the nickel extraction step). As a result, the lithium ions can be circulated or retained and concentrated in the steps without losing them. However, if the solvent used to extract the nickel ions does not contain lithium ions, the scrubbing step may not be performed.

The solvent is then subjected to back extraction using a back extraction solution such as sulfuric acid, hydrochloric acid, or nitric acid. The sulfuric acid is particularly preferred if a crystallization step is then performed. The pH is preferably in the range of 1.0 to 3.0, and more preferably 1.5 to 2.5. Although the O/A ratio and the number of times can be determined as needed, the O/A ratio is 5 to 1, and more preferably 4 to 2.

When the extracted solution such as a nickel sulfate solution is obtained by the back extraction, electrolysis and dissolution can be carried out as needed, and the solution can be then heated to 40°C to 120°C in the crystallization step to crystalize the nickel ions as a nickel salt such as nickel sulfate. This provides the nickel salt. Here, the crystallized solution may contain uncrystallized nickel ions and lithium ions. Therefore, the crystallized solution is mixed with the back extracted solution in the crystallization step and used for recrystallization, or used for the purpose of adjusting the nickel ion concentration of the scrubbing solution in the nickel extraction step, or further used for the extraction of the nickel extraction step. By repeatedly using them in the steps in this manner, the nickel ions and lithium ions can be circulated or retained and concentrated in the steps without losing them.

The nickel extracted solution from which the nickel ions have been extracted in the nickel extraction step can be added to the acidic leaching solution in the leaching step. This allows the lithium ions contained in the nickel extracted solution to be circulated in a series of steps including the leaching step, the neutralization step, the manganese extraction step, the cobalt step and the nickel extraction step. Preferably, after the lithium ion concentration in the nickel extracted solution has been increased to some extent by thus circulating the lithium ions, a hydroxylation step as described below is carried out.

### (Hydroxylation Step)

The nickel extracted solution obtained after the nickel extraction step contains substantially only lithium ions as a result of the separation of manganese ions, cobalt ions and nickel ions in each of the extraction steps as described above. That lithium ion was contained in the neutralized solution after the neutralization step. After the neutralization step, in the embodiment described herein, further after the manganese extraction step, the cobalt step and the nickel extraction step, the hydroxylation step is carried out to obtain an aqueous lithium hydroxide solution from the nickel extracted solution, in order to recover lithium. More particularly, when the nickel extracted solution is the aqueous lithium sulfate solution, the hydroxylation step produces an aqueous lithium hydroxide solution from the aqueous lithium sulfate solution.

Various techniques can be used to obtain the aqueous lithium hydroxide solution from the aqueous lithium sulfate solution.

For example, first, an aqueous lithium carbonate solution is obtained by adding a carbonate to or blowing a carbon dioxide gas into the aqueous lithium sulfate solution. Subsequently, in a so-called chemical conversion method, calcium hydroxide can be added to the aqueous lithium carbonate solution to generate the aqueous lithium hydroxide solution under the reaction formula: Li₂CO₃ + Ca(OH)₂ → 2LiOH + CaCO₃. Calcium ions that may remain in the solution can be removed with a cation exchange resin, a chelate resin, or the like.

Alternatively, barium hydroxide can be added to the aqueous lithium sulfate solution to obtain the aqueous lithium hydroxide solution based on the reaction: Li₂SO₄ + Ba(OH)₂ → 2LiOH + BaSO₄. At this time, barium that can be dissolved in the solution can be separated and removed using a cation exchange resin, a chelate resin, or the like.

Alternatively, when a so-called electrolysis method is employed, in an electrolytic bath provided with a cation exchange membrane that separates an anode side and a cathode side, the aqueous lithium sulfate solution is fed to the anode side to perform electrolysis, whereby the aqueous lithium hydroxide solution can be generated on the cathode side.

The aqueous lithium hydroxide solution thus obtained can be effectively used as a pH adjusting agent (neutralizing agent) in the neutralization step, and as an alkaline pH adjusting agent in each of the manganese extraction step, the cobalt extraction step, and the nickel extraction step.

By the way, it is preferable that a part of the aqueous lithium sulfate solution is subjected to the hydroxylation step and the remaining is used as at least a part of the acid in the leaching step. In this case, the use of the remaining of the aqueous lithium sulfate solution in the leaching step can increase the lithium ion concentration in the series of steps, and the aqueous lithium solution can be obtained in only a required amount for adjusting the pH or the like, thereby reducing the cost of the entire step including the production of lithium hydroxide.

### (Crystallizing Step)

After the hydroxylation step, a crystallizing step may be carried out to precipitate lithium hydroxide from the aqueous lithium hydroxide solution. For example, when a series of steps including the leaching step, the manganese extraction step, the cobalt extraction step, and the nickel extraction step are repeated, the lithium ion concentration in the solution such as the aqueous lithium sulfate solution can be gradually increased as lithium ion battery waste is freshly introduced into the series of steps. In such a case, the crystallizing step may be performed.

In the crystallizing step, a crystallizing operation such as heat concentration or vacuum distillation can be performed in order to deposit lithium hydroxide. For the heat concentration, a higher temperature during crystallizing leads to faster progression of the process, which is preferable. However, after crystallizing, it is preferable to dry the crystallized product at a temperature of less than 60°C at which water of crystallization is not released. This is because the release of the water of crystallization forms anhydrous lithium hydroxide, which is deliquescent and difficult to be handled.

In addition, a pulverization process or the like can be then performed in order to adjust the above lithium hydroxide to required physical properties.

### Examples

Next, the method for removing aluminum as described above was experimentally carried out and the effects thereof were confirmed, as described below. However, the descriptions herein are merely for illustrative and are not intended to be limited.

### (Test Example 1)

Battery powders obtained by roasting, crushing, and sieving lithium ion battery waste were leached with sulfuric acid, and the resulting leached residues were separated by solid-liquid separation to prepare leached solutions. The leached solutions having different aluminum ion concentrations were thus prepared as metal-containing solutions, and as shown in Table 1, each of the metal-containing solutions was subjected to a neutralization test performed by increasing the pH to 4.0, under conditions where calcium was added or not added, and different amounts of calcium were added.

Here, an aqueous 4M LiOH solution was used as the pH adjusting agent. In Examples 1 to 4 in which calcium was added, calcium sulfate was added as calcium to the neutralizing solution to be subjected to the neutralization before increasing the pH. The calcium was dissolved until the calcium ion concentration reached 0.6 g/L, and the remaining was present in the solution as a solid. In Example 4, 6 g/L of calcium was added in Example 3 to increase the pH to 4.0 and solid-liquid separation was performed, and 6 g/L of calcium was then further added to the neutralized solution to precipitate aluminum ions, and the resulting neutralized residue was removed by solid-liquid separation.

After neutralization, the neutralized residue was separated by solid-liquid separation to obtain a neutralized solution. The concentration of each metal ion in the neutralized solution was measured. Table 1 shows the results. In Table 1, "Ca/Al Molar Ratio (Neutralized Solution)" means the molar ratio after addition of calcium in Examples 1 to 4.

**[Table 1]**

| | | Comp. 1 | Comp. 2 | Comp. 3 | Ex. 1 | Ex. 2 | Ex. 3 | Ex. 4 |
|---|---|---|---|---|---|---|---|---|
| Ca Addition Conditions | | No Addition | | | Ca 3g/L | | Ca 6g/L | After Ex. 3 Ca added (Ca 6+6g/L) |
| Ca/Al Molar Ratio (Neutralized Solution) | | 0.024 | 0.005 | 0.005 | 1.499 | 0.615 | 1.265 | 2.530 |
| Al Concentration (g/L) | Neutralizinng Solution | 1.40 | 2.33 | | 1.40 | 3.19 | | |
| | Neutralized Solution (pH4.0) | 0.98 | 1.33 | 1.84 | 0.58 | 1.20 | 0.70 | 0.62 |
| | Difference 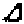 between Al Concentrations | 0.42 | 1.00 | 0.49 | 0.82 | 1.99 | 2.49 | 2.57 |

It is found from Table 1 that in Examples 1, 3 and 4, (Ex. 1, 3 and 4) the aluminum ion concentration in the neutralized solution was reduced by adding calcium as compared to Comparative Examples 1 to 3 (Comp. 1 to 3). In Example 2 (Ex. 2), since the concentration of aluminum ions in the neutralizing solution before increasing the pH was relatively high, the concentration of aluminum ions in the neutralized solution at the pH of 4.0 was not so low, but since the difference between the concentrations (difference Δ between Al concentrations) was larger, it can be said that aluminum was sufficiently removed.

Also, in Example 4, the amount of calcium added was doubled as compared to Example 3, but the difference between the aluminum ion concentrations was not so large. It is found from the results that even if an excessive amount of calcium is added, the effect of reducing the aluminum ion concentration is not further enhanced. On the other hand, if an excessive amount of calcium is added, a problem such as clogging of piping may occur in the subsequent manganese extraction step as described above. Therefore, the Ca/Al molar ratio is preferably 1.5 or less.

Further, as a result of analysis of the neutralized residue by SEM-EDS, aluminum was combined with calcium and fluorine, which was identified as a compound mainly of LiCa (AlF₆) based on conversion of each molar ratio of F/Al, Ca/Al, and F/Ca.

### (Test Example 2)

Raw materials M1 to M6 consisting of six battery powders P1 to P6 were obtained by changing the type of lithium ion battery waste, the roasting atmosphere (air or inert) and other conditions. The raw materials M7 and M8 were prepared by adding LiF to the battery powder P3. Table 2 shows the F/Al molar ratios and the Al and F grades of the raw materials M1 to M8.

**[Table 2]**

| | Battery Powder | F/Al | Grade (% by mass) | |
|---|---|---|---|---|
| | | | Al | F |
| Raw Material M1 | Battery Powder P1 | 6.9 | 1.2 | 5.6 |
| Raw Material M2 | Battery Powder P2 | 3.3 | 2.5 | 5.8 |
| Raw Material M3 | Battery Powder P3 | 1.3 | 4.1 | 3.8 |
| Raw Material M4 | Battery Powder P4 | 0.8 | 6.2 | 3.5 |
| Raw Material M5 | Battery Powder P5 | 0.8 | 2.5 | 1.4 |
| Raw Material M6 | Battery Powder P6 | 0.6 | 8.4 | 3.7 |
| Raw Material M7 | Battery Powder P3 | 3.0 | - | - |
| Raw Material M8 | Battery Powder P3 | 2.0 | - | - |

For each of the above raw materials M1 to M8, the metals contained therein were leached using sulfuric acid. At this time, calcium sulfate was added so that the Ca/Al molar ratio of the acidic leaching solution was 1.0.

The metal-containing solution which was the leached solution in the above leaching step was then subjected to the neutralization step of adding 4 M LiOH to adjust the pH to 4.0. The neutralized residue thus obtained was analyzed by the X-ray diffraction. As a result, it was found that the neutralized residue contained aluminum in the form of LiCa(AlF₆) and/or Li-Al composite hydroxide.

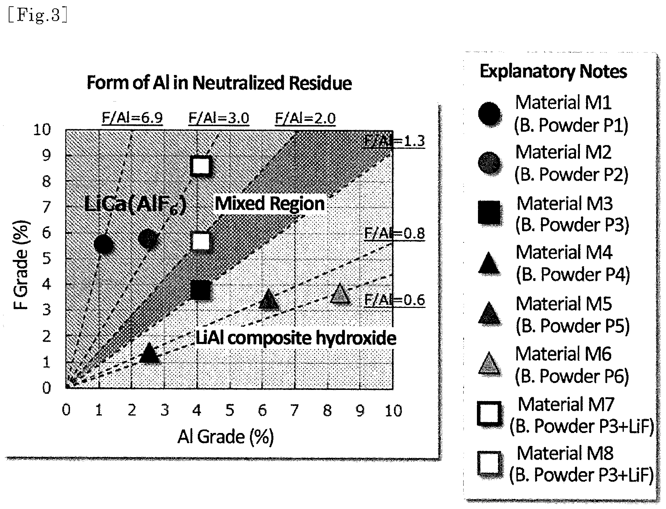

Based on these results, Fig. 3 shows a graph showing the relationship between the Al grade and the F grade of the raw material, to which the form in the neutralized residue was added. As shown in Fig. 3, when the F/Al molar ratio of the raw material was less than 1.3, the aluminum in the neutralized residue was substantially in the form of Li-Al composite hydroxide. On the other hand, when the F/Al molar ratio of the raw material was 1.3 or more, the aluminum in the neutralized residue was in the form of the mixture of Li-Al composite hydroxide and LiCa(AlF₆). Furthermore, when the F/Al molar ratio of the raw material was 2.0 or more, the aluminum in the neutralized residue was substantially in the form of LiCa(AlF₆).

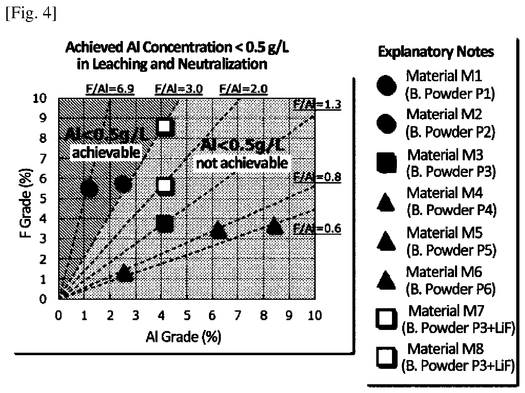

Further, in the test using each of the above raw materials M1 to M8, whether each solution of the leached solution obtained in the leaching step or the neutralized solution obtained in the neutralization step could achieve a low aluminum ion content of less than 0.5 g/L was confirmed. The results are shown in Fig. 4. As can be seen from Fig. 4, when the F/Al molar ratio of the raw material is 3.0 or more, the aluminum ion concentration of each solution is further decreased.

In view of the foregoing, it was found that aluminum can be effectively removed by the method for removing aluminum as described above.

## Claims

1. A method for removing aluminum, comprising:
a leaching step of bringing a raw material, the raw material having battery powder, the battery powder being obtained from lithium ion battery waste and comprising at least aluminum and nickel and/or cobalt, into contact with an acidic leaching solution to leach the battery powder to obtain a leached solution containing at least aluminum ions and nickel ions and/or cobalt ions; and
a neutralization step of using the leached solution as a metal-containing solution, increasing a pH of the metal-containing solution and
separating a neutralized residue to obtain a neutralized solution,
wherein a molar ratio of fluorine to aluminum (F/Al molar ratio) of the raw material is 1.3 or more, and
wherein, in the neutralization step, the metal-containing solution comprises calcium and fluorine, a molar ratio of calcium to aluminum ions (Ca/Al molar ratio) in the metal-containing solution is 0.2 or more, the aluminum ions in the metal-containing solution are precipitated and contained in the neutralized residue together with calcium and fluorine, and the neutralized residue comprises LiCa(AlF₆).

2. The method for removing aluminum according to claim 1, wherein the battery powder has a F/Al molar ratio of 1.3 or more.

3. The method for removing aluminum according to claim 1, wherein fluorine is added to the raw material separately from the battery powder to adjust the F/Al molar ratio of the raw material.

4. The method for removing aluminum according to any one of claims 1 to 3, wherein the F/Al molar ratio of the raw material is 2.0 or more.

5. The method for removing aluminum according to claim 4, wherein the F/Al molar ratio is 3.0 or more.

6. The method for removing aluminum according to any one of claims 1 to 3, wherein a pH of the metal-containing solution is increased to 3.0 to 4.5 when precipitating aluminum ions in the neutralization step.

7. The method for removing aluminum according to any one of claims 1 to 3, wherein calcium is added to the metal-containing solution in the neutralization step.

8. The method for removing aluminum according to claim 7, wherein calcium carbonate or calcium sulfate as the calcium is added to the metal-containing solution in the neutralization step.

9. The method for removing aluminum according to any one of claims 1 to 3, wherein, in the neutralization step, the molar ratio of calcium to aluminum ions (Ca/Al molar ratio) in the metal-containing solution is adjusted to 0.5 to 3.0.

10. The method for removing aluminum according to claim 9, wherein, in the neutralization step, the molar ratio of calcium to aluminum ions (Ca/Al molar ratio) in the metal-containing solution is adjusted to 0.5 to 1.5.

11. The method for removing aluminum according to any one of claims 1 to 3,
wherein the method comprises a preprocessing step of obtaining the battery powder from the lithium ion battery waste, and
wherein the lithium ion battery waste comprises an electrolyte, and at least a part of the electrolyte is removed from the lithium ion battery waste by the preprocessing step.

12. The method for removing aluminum according to any one of claims 1 to 3,
wherein the battery powder comprises lithium, and the neutralized solution comprises lithium ions, and
wherein, after the neutralized solution, lithium contained in the neutralized solution is recovered.

13. A method for recovering metals, comprising recovering metals from lithium ion battery waste using the method for removing aluminum according to any one of claims 1 to 3.

## Patentansprüche

1. Verfahren zum Entfernen von Aluminium, umfassend: einen Laugungsschritt eines Inberührungbringens eines Rohmaterials, wobei das Rohmaterial Batteriepulver aufweist, wobei das Batteriepulver aus Lithium-Ionen-Batterieabfall erhalten wird und mindestens Aluminium und Nickel und/oder Cobalt umfasst, mit einer sauren Laugungslösung, um das Batteriepulver auszulaugen und eine ausgelaugte Lösung zu erhalten, die mindestens Aluminiumionen und Nickelionen und/oder Cobaltionen enthält; und
einen Neutralisationsschritt eines Verwendens der ausgelaugten Lösung als eine metallhaltige Lösung, eines Erhöhens eines pH-Werts der metallhaltigen Lösung und eines Trennens eines neutralisierten Rests, um eine neutralisierte Lösung zu erhalten, wobei ein Molverhältnis von Fluor zu Aluminium (F/Al-Molverhältnis) des Rohmaterials 1,3 oder mehr beträgt und
wobei, in dem Neutralisationsschritt, die metallhaltige Lösung Calcium und Fluor umfasst, ein Molverhältnis von Calcium- zu Aluminiumionen (Ca/Al-Molverhältnis) in der metallhaltigen Lösung 0,2 oder mehr beträgt, die Aluminiumionen in der metallhaltigen Lösung ausgefällt und zusammen mit Calcium und Fluor in dem neutralisierten Rest enthalten sind, und der neutralisierte Rest LiCa(AlF₆) umfasst.

2. Verfahren zum Entfernen von Aluminium nach Anspruch 1, wobei das Batteriepulver ein F/Al-Molverhältnis von 1,3 oder mehr aufweist.

3. Verfahren zum Entfernen von Aluminium nach Anspruch 1, wobei dem Rohmaterial getrennt von dem Batteriepulver Fluor zugesetzt wird, um das F/Al-Molverhältnis des Rohmaterials einzustellen.

4. Verfahren zum Entfernen von Aluminium nach einem der Ansprüche 1 bis 3, wobei das F/Al-Molverhältnis des Rohmaterials 2,0 oder mehr beträgt.

5. Verfahren zum Entfernen von Aluminium nach Anspruch 4, wobei das F/Al-Molverhältnis 3,0 oder mehr beträgt.

6. Verfahren zum Entfernen von Aluminium nach einem der Ansprüche 1 bis 3, wobei ein pH-Wert der metallhaltigen Lösung auf 3,0 bis 4,5 erhöht wird, wenn die Aluminiumionen in dem Neutralisationsschritt ausgefällt werden.

7. Verfahren zum Entfernen von Aluminium nach einem der Ansprüche 1 bis 3, wobei der metallhaltigen Lösung in dem Neutralisationsschritt Calcium zugesetzt wird.

8. Verfahren zum Entfernen von Aluminium nach Anspruch 7, wobei der metallhaltigen Lösung in dem Neutralisationsschritt Calciumcarbonat oder Calciumsulfat als das Calcium zugesetzt wird.

9. Verfahren zum Entfernen von Aluminium nach einem der Ansprüche 1 bis 3, wobei, in dem Neutralisationsschritt, das Molverhältnis von Calcium- zu Aluminiumionen (Ca/Al-Molverhältnis) in der metallhaltigen Lösung auf 0,5 bis 3,0 eingestellt wird.

10. Verfahren zum Entfernen von Aluminium nach Anspruch 9, wobei, in dem Neutralisationsschritt, das Molverhältnis von Calcium- zu Aluminiumionen (Ca/Al-Molverhältnis) in der metallhaltigen Lösung auf 0,5 bis 1,5 eingestellt wird.

11. Verfahren zum Entfernen von Aluminium nach einem der Ansprüche 1 bis 3, wobei das Verfahren einen Vorverarbeitungsschritt eines Erhaltens des Batteriepulvers aus dem Lithium-Ionen-Batterieabfall umfasst und wobei der Lithium-Ionen-Batterieabfall einen Elektrolyten umfasst und mindestens ein Teil des Elektrolyten durch den Vorverarbeitungsschritt aus dem Lithium-Ionen-Batterieabfall entfernt wird.

12. Verfahren zum Entfernen von Aluminium nach einem der Ansprüche 1 bis 3, wobei das Batteriepulver Lithium umfasst und die neutralisierte Lösung Lithiumionen umfasst und wobei, nach der neutralisierten Lösung, das Lithium, das in der neutralisierten Lösung enthalten ist, rückgewonnen wird.

13. Verfahren zum Rückgewinnen von Metallen, umfassend das Rückgewinnen von Metallen aus Lithium-Ionen-Batterieabfall unter Verwendung des Verfahrens zum Entfernen von Aluminium nach einem der Ansprüche 1 bis 3.

## Revendications

1. Procédé d'élimination de l'aluminium, comprenant :
une étape de lixiviation consistant à mettre en contact une matière première, la matière première ayant une poudre de batterie, la poudre de batterie étant obtenue à partir de déchets de batteries lithium-ion et comprenant au moins de l'aluminium et du nickel et/ou du cobalt, avec une solution de lixiviation acide pour lixivier la poudre de batterie afin d'obtenir une solution lixiviée contenant au moins des ions aluminium et des ions nickel et/ou des ions cobalt ; et
une étape de neutralisation consistant à utiliser la solution lixiviée comme solution contenant des métaux, à augmenter un pH de la solution contenant des métaux et à séparer un résidu neutralisé pour obtenir une solution neutralisée, dans lequel un rapport molaire du fluor à l'aluminium (rapport molaire F/Al) de la matière première est égal ou supérieur à 1,3, et
dans lequel, lors de l'étape de neutralisation, la solution contenant des métaux comprend du calcium et du fluor, un rapport molaire entre les ions calcium et aluminium (rapport molaire Ca/Al) dans la solution contenant des métaux est égal ou supérieur à 0,2, les ions aluminium dans la solution contenant des métaux sont précipités et contenus dans le résidu neutralisé conjointement avec le calcium et le fluor, et le résidu neutralisé comprend du LiCa(AlF₆).

2. Procédé d'élimination de l'aluminium selon la revendication 1, dans lequel la poudre de batterie a un rapport molaire F/Al de 1,3 ou plus.

3. Procédé d'élimination de l'aluminium selon la revendication 1, dans lequel du fluor est ajouté à la matière première séparément de la poudre de batterie pour ajuster le rapport molaire F/Al de la matière première.

4. Procédé d'élimination de l'aluminium selon l'une quelconque des revendications 1 à 3, dans lequel le rapport molaire F/Al de la matière première est égal ou supérieur à 2,0.

5. Procédé d'élimination de l'aluminium selon la revendication 4, dans lequel le rapport molaire F/Al est égal ou supérieur à 3,0.

6. Procédé d'élimination de l'aluminium selon l'une quelconque des revendications 1 à 3, dans lequel un pH de la solution contenant des métaux est augmenté à 3,0 à 4,5 lors de la précipitation des ions aluminium dans l'étape de neutralisation.

7. Procédé d'élimination de l'aluminium selon l'une quelconque des revendications 1 à 3, dans lequel du calcium est ajouté à la solution contenant des métaux dans l'étape de neutralisation.

8. Procédé d'élimination de l'aluminium selon la revendication 7, dans lequel du carbonate de calcium ou du sulfate de calcium sous forme de calcium est ajouté à la solution contenant des métaux dans l'étape de neutralisation.

9. Procédé d'élimination de l'aluminium selon l'une quelconque des revendications 1 à 3, dans lequel, dans l'étape de neutralisation, le rapport molaire entre les ions calcium et aluminium (rapport molaire Ca/A1) dans la solution contenant des métaux est ajusté à 0,5 à 3,0.

10. Procédé d'élimination de l'aluminium selon la revendication 9, dans lequel, dans l'étape de neutralisation, le rapport molaire entre les ions calcium et aluminium (rapport molaire Ca/Al) dans la solution contenant des métaux est ajusté à 0,5 à 1,5.

11. Procédé d'élimination de l'aluminium selon l'une quelconque des revendications 1 à 3,
dans lequel le procédé comprend une étape de prétraitement consistant à obtenir la poudre de batterie à partir des déchets de batteries lithium-ion, et
dans lequel les déchets de batteries lithium-ion comprennent un électrolyte, et au moins une partie de l'électrolyte est éliminée des déchets de batteries lithium-ion par l'étape de prétraitement.

12. Procédé d'élimination de l'aluminium selon l'une quelconque des revendications 1 à 3,
dans lequel la poudre de batterie comprend du lithium, et la solution neutralisée comprend des ions lithium, et
dans lequel, après la solution neutralisée, le lithium contenu dans la solution neutralisée est récupéré.

13. Procédé de récupération de métaux, comprenant la récupération de métaux à partir de déchets de batteries lithium-ion à l'aide du procédé d'élimination de l'aluminium selon l'une quelconque des revendications 1 à 3.
